# EUROPEAN PATENT APPLICATION

(11) **EP 4 228 326 A1**
(43) Date of publication of application: **16.08.2023**
(21) Application number: 21877467.7
(22) Date of filing: 30.09.2021
(51) Int. Cl.: H04W 36/32, H04W 4/44, H04W 48/18

(54) **WIRELESS COMMUNICATION DEVICE FOR VEHICLE, AND COMMUNICATION CONTROL METHOD**

(30) Priority: 08.10.2020 JP 2020170639
(71) Applicant: DENSO CORPORATION, Kariya-city, Aichi-pref, 448-8661 (JP)
(72) Inventor: HOSHINO, Masayuki, Kariya- city Aichi-pref., 448-8661 (JP)
(74) Representative: Winter, Brandl - Partnerschaft mbB
(86) International application number: PCT/JP2021/036080
(87) International publication number: WO 2022/075166

(57) **Abstract**

A wireless communication device (5) uses a Wi-Fi communication and multiple cellular communications with different APNs in parallel. The wireless communication device (5) determines a mobility state based on the number of reselections of serving cell within a predetermined time. In a situation where the mobility state is at a normal level and also the Wi-Fi communication is possible, the Wi-Fi communication is set to data communication having a delay allowable amount equal to or higher than a predetermined value or a communication path of an in-vehicle device a delay allowable amount is set. On the other hand, when the mobility state is at a high or middle level, the Wi-Fi communication is excluded from communication path options.

## Description

### CROSS REFERENCE TO RELATED APPLICATION

This application is based on Japanese Patent Application No. 2020-170639 filed on October 8, 2020, the disclosure of the above application is incorporated herein by reference.

### TECHNICAL FIELD

The present disclosure relates to a vehicle wireless communication device and a communication control method that control a communication path between an in-vehicle device and an external device.

### BACKGROUND ART

Patent Literature 1 discloses a configuration that enables wireless communication using multiple types of communication media. In the configuration, a communication performance of each communication medium is scored based on multiple types of indices indicating a radio wave environment, and a communication media used for data communication is selected. Specifically, the communication performance of each communication media is scored based on the number of multipaths, the degree of interference, the amount of Doppler shift, the effective throughput estimation value, and movement environment information. The communication medium with the highest score is selected.

In addition, the movement environment information in Patent Literature 1 refers to position information of cellular base stations corresponding to each communication method and obstacle environment information that are provided from the car navigation system. The obstacle environment is information indicating whether a current position is in an area with many obstacles, such as an area with tall buildings or in a mountainous area, or in an area with few obstacles.

Further, communication media assumed in Patent Literature 1 are, for example, FSK FM broadcasting, CD MA telephone lines, OFDM wireless LAN, QPSK road-to-vehicle communication, and the like. The FSK is an abbreviation for Frequency shift keying. The COMA is an abbreviation for Code Division Multiple Access. The OFDM is an abbreviation for Orthogonal Frequency Division Multiplexing. The QPSK is an abbreviation for Quadrature Phase Shift Keying.

In addition, 3GPP (Third Generation Partnership Project) has proposed a method of optimizing network processing according to usage characteristics of mobile communication terminals (Non-Patent Literature 1, etc.).

### RELATED ART LITERATURE

### PATENT LITERATURE

Patent Literature 1: JP 4655955 B2

### NON-PATENT LITERATURE

Non-Patent Literature 1: 3GPP TS 36.304 V8.10.0 (2011-06) 3rd Generation Partnership Project, "Evolved Universal Terrestrial Radio Access (E-UTRA); User Equipment (UE) procedures in idle mode (Release 8)"

### SUMMARY OF INVENTION

Patent Literature 1 shows a method of selecting one service used for data communication from multiple communication services such as wireless LAN and telephone line, by using the number of multipaths, the degree of interference, the amount of Doppler shift, the effective throughput estimation value, a position of the cellular base station, and the number of obstacles.

However, Patent Literature 1 does not disclose a configuration for selecting a communication service based on indices other than the above. There remains a configuration for optimizing operations of the vehicle wireless communication device by employing other parameters as indices in selecting the communication service.

Further, while some communication services are less likely to cause a decline in communication efficiency due to movement, there are communication services that incur costs such as communication charges. Furthermore, while some communication services are likely to cause the decline in communication efficiency due to the movement, there are communication services that can reduce the communication cost. That is, each communication service has its own characteristics.

For example, in short-range communication such as Wi-Fi (registered trademark), data communication cannot be started as soon as a device enters a communication range of an access point. The data communication cannot be performed until procedures for communication connection are completed. The procedures for the communication connection include, for example, IP address allocation, settings for encrypted communication, and the like. Such short-range communication has an advantage of enabling the reduction in communication charges, but has a disadvantage of causing delays in communication connection. In particular, when a vehicle moves and a stay time in the communication area of the access point is short, the ratio of the delay time at the time of communication connection to the time during which short-range communication is possible increases. As a result, there may be cases where the overall communication efficiency is higher if the cellular communication continues to be used, as compared with a case where switching to the short-range communication is performed.

Based on the above circumstances, it is an object of the present disclosure to provide a vehicle communication device and a communication control method that are capable of reducing communication costs while preventing reduction in the communication efficiency due to vehicle movements.

A vehicle wireless communication device for achieving the object is a vehicle wireless communication device which is used for a vehicle and is an interface for data communication performed by at least one in-vehicle device with an external device which is a different communication device placed outside the vehicle. The vehicle wireless communication device includes: a short-range communication unit that performs short-range communication which is wireless communication via an access point of a wireless local area network placed outside the vehicle; a cellular communication unit that performs cellular communication which is wireless communication via a cellular base station; a mobility state determination unit that determines a mobility state of the vehicle; and a communication path selection unit that selects a communication path for the communication between the in-vehicle device and the external device, based on the mobility state determined by the mobility state determination unit. The communication path selection unit more preferentially adopts, as a communication path of the in-vehicle device, the short-range communication than the cellular communication when the mobility state is equal to or lower than a predetermined reference level. The communication path selection unit adopts, as the communication path of the in-vehicle device, the cellular communication when the mobility state exceeds the predetermined reference level.

The vehicle communication device described above was created by paying attention to the above difficulties. When the mobility state is equal to or lower than the predetermined reference level, that is, when it is expected that the stay time within a communication range provided by the access point is relatively long, switching to the short-range communication is allowed. Further, it is assumed that, when the mobility state exceeds the reference level and the stay time within the communication range provided by the access point is short, the switching to the short-range communication is not performed. According to the configuration, it may be possible to reduce costs such as communication charges while preventing the reduction in the communication efficiency.

A communication control method for achieving the object described above is a communication control method that is used for a vehicle and executed by at least one processor. A communication path for data communication between at least one in-vehicle device and an external device includes short-range communication which is wireless communication via an access point of a wireless local area network placed outside the vehicle and a cellular communication that is wireless communication via a cellular communication base station. The at least one processor controls either the short-range communication or the cellular communication. The method includes: a mobility state determination step that determines a mobility state of the vehicle; and a communication path selection step that selects a communication path for communication between the in-vehicle device and the external device, based on the mobility state determined in the mobility state determination step. The communication path selection step more preferentially adopts, as a communication path of the in-vehicle device, the short-range communication than the cellular communication when the mobility state is equal to or lower than a predetermined reference level. The communication path selection step adopts, as the communication path of the in-vehicle device, the cellular communication when the mobility state exceeds the predetermined reference level.

According to the above method, the similar effect can be obtained by the similar operating principle to that of the vehicle wireless communication device.

The reference numerals in parentheses described in the claims indicate a correspondence relationship with the specific means described in the embodiment described later as one mode, and do not limit the technical scope of the present disclosure.

### BRIEF DESCRIPTION OF DRAWINGS

FIG. 1 is a diagram for describing an overview of a mobile body communication system 100.
FIG. 2 is a diagram showing an example of a configuration of an in-vehicle communication system 1.
FIG. 3 is a block diagram showing a configuration of a wireless communication device 5.
FIG. 4 is a flowchart showing an overview of processes for selecting a communication path for each in-vehicle device 6.
FIG. 5 is a flowchart showing an allocation process of the communication path for each in-vehicle device 6.
FIG. 6 is a diagram for explaining operation of a communication controller F3.
FIG. 7 is a block diagram showing the configuration of the wireless communication device 5.
FIG. 8 is a diagram showing a mode of allocating an APN for each application.

### DESCRIPTION OF EMBODIMENTS

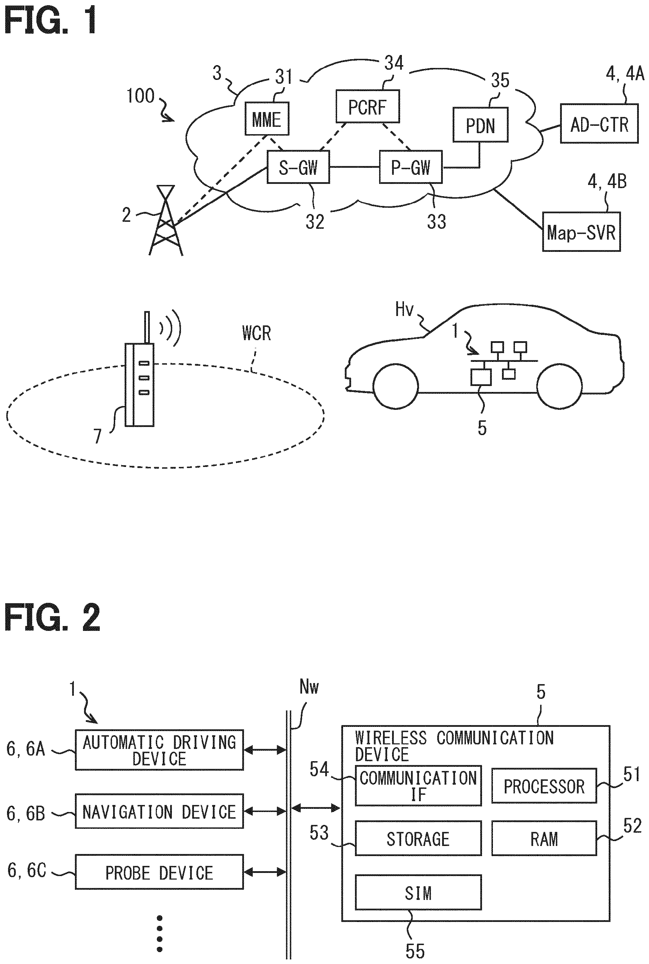

Hereinafter, embodiments of the present disclosure will be described below with reference to the drawings. FIG. 1 is a diagram showing one example of a schematic configuration of a mobile body communication system 100 according to the present disclosure. The mobile body communication system 100 provides wireless communication conforming to, for example, LTE (Long Term Evolution). It is assumed that the parts whose description are omitted in the embodiment are performed by the method defined by the LTE standard, such as a method disclosed in Non-Patent Literature 1. Note that the mobile body communication system 100 may provide wireless communication conforming to the 4G standard, the 5G standard, or the like. Hereinafter, the LTE, 4G, 5G, and the like will be collectively referred to as LTE and the like. The following embodiment can be implemented with appropriate changes so as to conform to 4G, 5G, and the like.

### <Overall Configuration>

As shown in FIG. 1, the mobile body communication system 100 includes an in-vehicle communication system 1, a cellular base station 2, a core network 3, an automated driving management center 4A, and a map server 4B. The automated driving management center 4A and the map server 4B correspond to one example of an external device 4 for the in-vehicle communication system 1. The external device 4 refers to a different communication device provided outside as vehicle, such as a server or a center, for example.

Further, the mobile body communication system 100 may also include a Wi-Fi base station 7 which is a base station for forming a wireless LAN (Local Area Network) conforming to Wi-Fi (registered trademark). As the Wi-Fi standard, various standards such as IEEE802.11n, IEEE802.1 1 ac, and IEEE802.11ax (so-called Wi-Fi6) can be adopted. WCR in FIG. 1 indicates a communication area of the Wi-Fi base station 7. The Wi-Fi base station 7 itself and the communication area WCR formed by the Wi-Fi base station 7 can be referred to as an access point or a Wi-Fi spot. The Wi-Fi base station 7 is placed, as an infrastructure, at an arbitrary location by various service providers. Although only one Wi-Fi base station 7 is shown in FIG. 1, multiple Wi-Fi base stations 7 may exist.

The in-vehicle communication system 1 is a communication system built in a vehicle. The in-vehicle communication system 1 can be mounted on various vehicles capable of traveling on roads, such as four-wheeled vehicles, two-wheeled vehicles, three-wheeled vehicles, and the like. Motorized bicycles may also be included in two-wheeled vehicles. A vehicle Hv to which the system is applied may be an owner's car owned by an individual, or may be a vehicle provided for a car sharing service or a vehicle rental service. Also, the vehicle Hv may be a service car. The service car includes a taxi, a fixed-route bus, a shared bus, and the like. Also, the service car may be a robot taxi or a driverless bus without a driver. The service car can include a vehicle as a driverless delivery robot that automatically transports packages to predetermined destinations. Furthermore, the vehicle Hv may be a remotely operated vehicle which is remotely operated by an operator outside the vehicle. The operator here refers to a person who has the authority to control the vehicle by remote control from the outside of the vehicle Hv.

The in-vehicle communication system 1 performs data communication with the external device 4 such as the automated driving management center 4A via the cellular base station 2 and the core network 3, for example. Further, the in-vehicle communication system 1 is able to communicate with the external device 4 via the Wi-Fi base station 7 when it exists within the communication area of the Wi-Fi base station 7. Hereinafter, for convenience, the communication via the cellular base station 2, in other words, communication conforming to the LTE/4G/5G standards will also be referred to as cellular communication. Further, communication conforming to Wi-Fi is also referred to as Wi-Fi communication. The Wi-Fi communication can be performed when the vehicle Hv exists within the communication area WCR of the Wi-Fi base station 7.

The in-vehicle communication system 1 includes the wireless communication device 5 as a configuration that provides the wireless communication function described above. The wireless communication device 5 corresponds to a user equipment (also referred to as an UE) for the core network 3. The wireless communication device 5 may be removable by the user. Further, the wireless communication device 5 may be a mobile terminal such as a smart phone brought into the vehicle by the user. The wireless communication device 5 corresponds to a vehicle wireless communication device.

The wireless communication device 5 is able to use multiple types of wireless communication services respectively having different communication methods such as cellular communication and Wi-Fi communication. Further, the wireless communication device 5 is able to use multiple wireless communication services each having a different APN (Access Point Name) as cellular communication. The wireless communication device 5 performs data communication with various external devices 4 by selectively using the multiple wireless communication services. The APN is, in one aspect, an identifier for the communication service. The APN is associated with a communication service provider (so-called carrier) that provides the communication service. If the APN is different, even when the external device 4 serving as a communication partner is the same, a path through which data flows to the external device 4 is substantially or virtually different. Multiple wireless communication services respectively implement different communication paths. That is, the wireless communication device 5 is able to perform data communication with the external device 4 by using multiple communication paths. Note that the concept of wireless communication services or communication paths that can be used by the wireless communication device 5 can include not only cellular communication corresponding to each APN, but also Wi-Fi communication. The in-vehicle communication system 1 including the wireless communication device 5 will be described later.

The cellular base station 2 is an equipment for transmitting wireless signals conforming to standards such as LTE to the in-vehicle communication system 1 and receiving wireless signals from the in-vehicle communication system 1. The cellular base station 2 is also referred to as an eNB (evolved NodeB). The cellular base station 2 may be a gNB (next generation NodeB) used in 5G. The cellular base station 2 is arranged for each predetermined cell. The cell refers to a communicable range covered by one cellular base station 2. Note that the cellular base station 2 itself may also be called a cell.

The cellular base station 2 is connected to the core network 3 via an access line such as an IP (Internet Protocol) network. The cellular base station 2 relays traffic between the wireless communication device 5 and the core network 3. The cellular base station 2 allocates transmission opportunities based on requests from the in-vehicle communication system 1, for example. The transmission opportunities consist of frequency bands, times, modulation schemes that can be used for data transmission, and the like.

The cellular base station 2 distributes evaluation parameters periodically or when a predetermined event is detected. The evaluation parameters are used for determination of a mobility state (hereinafter, also referred to as mS) by an UE including the wireless communication device 5. The evaluation parameters include, for example, a first upper limit number NH, a second upper limit number NM, a first observation time T_{CR}, a second observation time T_{CRH}, and the like. The mobility state calculated by each UE using these evaluation parameters represents the frequency of times a serving cell is reselected within the first observation time T_{CR}. Here, the serving cell refers to the cellular base station 2 itself which is wirelessly accessing, or the cell formed by the cellular base station 2. The technical significance of the above evaluation parameters and the details of the mobility state determination method will be described later.

Here, it is assumed that the cellular base station 2 determines the evaluation parameters such as the first upper limit number NH according to information provided from the core network 3, and notifies the wireless communication device 5 of it. However, the present disclosure is not limited to this. For example, a MME 31 or the like may determine the evaluation parameters such as the first upper limit number NH. Further, various evaluation parameters may be registered in the wireless communication device 5 in advance.

In addition, the cellular base station 2 transmits a reference signal (hereinafter, also referred to as CSI-RS which is an abbreviation for CSI-Reference Signal) for grasping information (also referred to as CSI which is an abbreviation for Channel State Information) indicating a state of the transmission path. The CSI-RS is a known control signal for measuring wireless channel states. Further, the cellular base station 2 transmits also a CRS (Cell-specific RS) as a control signal for cell selection. The CRS is a cell-specific reference signal used for downlink reception quality measurement and the like. In one aspect, the CRS and the CSI-RS correspond to a control signal for wireless communication device 5 or MME 31 to select the serving cell of the wireless communication device 5. The CRS and the CSI-RS are also simply referred to as reference signals or RSs. The RS may be periodically transmitted, or may be transmitted in response to an occurrence of a predetermined event. The RS may be transmitted, for example, when the cellular base station 2 receives an inquiry from the UE or when the frequency of occurrence of communication errors exceeds a predetermined threshold. Further, the cellular base station 2 distributes an RS transmission power setting value (hereinafter, referred to as RSPw which is abbreviation for RS Power) to each UE periodically or when a predetermined event occurs. For example, the cellular base station 2 sequentially transmits system information (referred to as SIB which is abbreviation for System Information Block) including the RsPw and a wireless resource control (referred to as RRC which is abbreviation for Radio Resource Control) message to each UE. Note that the set value of RSPw can be updated at intervals of several hundred milliseconds to several minutes. As the RSPw, for example, a reference signal power included in PDSCH-Config Common can be used. As the system information including the RSPw, for example, System Information Block Type 2 can be used. As the as the RRC message including the RSPw, RRC Connection Reconfiguration or the like can be adopted.

The core network 3 is a so-called EPC (Evolved Packet Core). The core network 3 provides functions such as user authentication, contract analysis, data packet transfer route setting, and QoS (Quality of Service) control. The core network 3 may include public telecommunications networks provided by telecommunications operators, such as IP networks or mobile telephone networks, for example. The core network 3 corresponds to a wireless communication network.

The core network 3 includes, for example, the MME 31, a S-GW 32, a P-GW 33, a PCRF 35, and the like. The MME 31 is an abbreviation for Mobility Management Entity, and is in charge of managing UEs within a cell and controlling the cellular base station 2. The MME 31 serves as a gateway for control signals between the cellular base station 2 and the S-GW 32, for example. The S-GW 32 is an abbreviation for Serving Gateway, and is a configuration corresponding to a gateway for data from the UE. The P-GW 33 is an abbreviation for Packet Data Network Gateway, and corresponds to a gateway for connecting to the PDN (Packet Data Network) 35 such as the Internet. The P-GW 33 allocates IP addresses and transfers packets to the S-GW. The PCRF 35 is an abbreviation for Policy and Charging Rules Function, and is a logic node that performs control for QoS for user data transfer and billing. The PCRF 35 includes a database with network policies and billing rules.

Although only one cellular base station 2, one MME 31, one S-GW 32, one P-GW 33, and one PCRF 35 are shown in FIG. 1, multiple cellular base stations 2, multiple MMEs 31, multiple S-GWs 32, multiple P-GWs 33, and multiple PCRFs 35 may exist in the network as a whole. For example, the PCRF 35 may be placed for each APN or telecommunication carrier. The data transfer path in the core network 3 differs for each APN. Note that solid lines connecting elements in the core network 3 in FIG. 1 indicate a transfer route of user data and broken lines indicate exchange of control signals.

In addition, the core network 3 may include an HLR (Home Location Register) / HSS (Home Subscriber Server) and the like. The names, combinations, and the like of the devices constituting the core network 3 can be appropriately changed so as to correspond to the communication standard adopted by the mobile body communication system 100, such as 5G, for example. Also, the functional arrangement in the core network 3 can be changed as appropriate. For example, the functions provided by the PCRF 35 may be included in another device.

Hereinafter, the devices such as, for example, the MME 31 and the S-GW 32 that constitute the core network 3 are simply referred to as the core network 3 when not distinguished. Each device that constitutes the core network 3 such as the MME 31 and the S-GW 32 corresponds to a network device. The cellular base station 2 can also be included in the network device. This is because the cellular base station 2 serves as an interface for communication between the core network 3 and the wireless communication device 5. The description of "network device" in the present disclosure can be read as "at least one of the cellular base station 2 or the core network 3". The network device can include various facilities for data communication between the wireless communication device 5 and the external device 4.

The automated driving management center 4A is a center that manages an operation state of the vehicle that automatically travels, and is able to perform data communication with the in-vehicle communication system 1 via the cellular base station 2 or the like. The automated driving management center 4A receives, for example, a traveling state report uploaded from the in-vehicle communication system 1 and determines whether there is an abnormality. The traveling state report is a data set that indicates a state inside the vehicle during automated driving and a state outside the vehicle during automated driving. The automated driving management center 4A may store, in an operation recording device (not shown), the traveling state report transmitted from each vehicle. In addition, the automated driving management center 4A may have a function of creating and distributing a meddle- to long-term control plan for the vehicle, such as a plan of calculating a travel route of the vehicle.

The map server 4B is a server that distributes map data stored in a predetermined database based on a request from a vehicle, and is able to perform data communication with the in-vehicle communication system 1 via the cellular base station 2 or the like. The map data distributed by the map server 4B may be high accuracy map data or navigation map data. The high accuracy map data here corresponds to map data indicating a road structure, a position coordinate of a feature disposed along the road, and the like with the accuracy that enables use for automated driving. The navigation map data is map data for navigation and corresponds to map data with relatively lower accuracy than the high accuracy map data.

Note that various servers or centers can be adapted as the external device 4. The mobile body communication system 100 may include, as the external device 4, a remote control center that remotely controls the vehicle by communicating with a vehicle remote control device mounted on the vehicle. The remote control center includes a center remote control device which is a device for an operator to remotely control the vehicle. The center remote control device is configured as a cockpit including, for example, a display showing a scenery around the vehicle and operation members such as steering wheels and pedals. Note that the remote control center may be integrated with the above-described automated driving management center 4A. The automated driving management center 4A as a remote control center may remotely control the vehicle, for example, based on a request from an automated driving device 6A.

### <Configuration of in-vehicle communication system 1>

The in-vehicle communication system 1 includes, for example, the wireless communication device 5, the automated driving device 6A, a navigation device 6B, a probe device 6C, and the like. Various in-vehicle devices 6 such as the automated driving device 6A, the navigation device 6B, and the probe device 6C are connected to the wireless communication device 5 via a vehicle interior network Nw which is a communication network formed in the vehicle. Devices connected to the vehicle interior network Nw can communicate with each other. That is, the wireless communication device 5 is able to mutually communicate with each of the automated driving device 6A, the navigation device 6B, and the probe device 6C. The vehicle interior network Nw enables multiplex communication using a time division multiple access (TDMA) or the like. Note that, as multiplex communication methods, frequency division multiple access (FDMA), code division multiple access (CDMA), orthogonal frequency division multiplexing (OFDM), and the like can be adopted.

Note that specific devices included in the in-vehicle communication system 1 may communicate directly with each other without the vehicle interior network Nw. Although the vehicle interior network Nw is configured as a bus type in FIG. 2, it is not limited to this. The network topology may be a mesh type, a star type, a ring type, or the like. As a standard of the vehicle interior network Nw, various standards, such as, for example, controller area network (hereinafter, CAN, which is registered trademark), Ethernet (registered trademark), or FlexRay (registered trademark), can be adopted. Further, a mode of connection between the wireless communication device 5 and each in-vehicle device 6 is not limited to wired connection, and may be wireless connection. The in-vehicle device 6 may be an ECU (Electronic Control Unit).

The wireless communication device 5 includes at least one subscriber identity module (hereinafter, referred to as SIM) 55 and is able to perform data communication using at least one APN corresponding to the SIM 55. In other words, the wireless communication device 5 is able to wirelessly communicate with multiple external devices 4 by using multiple wireless communication services respectively corresponding to multiple APNs. The APN corresponding to a certain SIM 55 refers to an APN that can be used based on information of the SIM 55. The wireless communication device 5 selectively uses the wireless communication service corresponding to each APN based on the purpose of communication and the communication status. In addition, the wireless communication device 5 is able to perform the Wi-Fi communication. The wireless communication device 5 selectively uses the cellular communication and the Wi-Fi communication for each APN described above, according to the mobility state and the occurrence situation of communication traffic from each in-vehicle device 6.

Such a wireless communication device 5 corresponds to an interface for wireless communication between each in-vehicle device 6 and the external device 4 as a predetermined communication partner. The wireless communication device 5 as a wireless communication interface corresponds to a device executing at least one of a process of transmitting data input from the in-vehicle device 6 to the external device 4 or a process of transmitting data received from the external device 4 to the in-vehicle device 6. By installing the wireless communication device 5, the vehicle becomes a connected car that can be connected to the Internet.

The wireless communication device 5 mainly includes a computer including a processing unit 51, a RAM 52, a storage 53, a communication interface 54, a SIM 55, and a bus connecting them. The processing unit 51 is hardware for calculation processing combined with the RAM 52. The processing unit 51 includes at least one calculation core, such as a central processing unit (CPU). The processing unit 51 executes various processes by accessing the RAM 52.

The storage 53 includes a non-volatile storage medium such as a flash memory. A communication control program is stored in the storage 53 as a program executed by the processing unit 51. Execution of the above-described program by the processing unit 51 corresponds to execution of a communication control method which is a method corresponding to the communication control program. In the storage 53, information (for example, profiles and the like) about APNs to which the wireless communication device 5 is connectable is registered. Information about the APN includes information necessary for the wireless communication device 5 to perform data communication using a telephone line. For example, the APN information includes information for specifying a gateway (that is, a connection destination) that serves as a connection window from a telephone line to a network such as the Internet.

The communication interface 54 is a circuit module for communicating with the in-vehicle device 6 via the vehicle interior network Nw. The communication interface 54 is implemented using an analog circuit element, an IC, a PHY chip conforming to a communication standard of the vehicle interior network Nw. Various data such as, for example, transmission data output from the in-vehicle device 6, and vehicle speed data detected by a vehicle speed sensor are input to the communication interface 54. The transmission data here corresponds to communication traffic (in other words, data) directed to the external device 4.

The SIM 55 is an IC module in which information for identifying a contractor of a line is recorded, and is configured as an IC card, for example. For example, in the SIM 55, a unique number called IMSI (International Mobile Subscriber Identity) is recorded in association with a telephone number of the contractor. Further, setting data related to the wireless communication connection such as available frequencies, priorities of frequencies observed for determining a serving cell, and the like are registered in the SIM 55. The SIM 55 may be inserted into a card slot (not shown) or may be an eSIM (embedded SIM). The concept of SIM 55 here includes both a removable card type and the embedded type (that is, eSIM).

The SIM 55 is configured so that multiple APNs can be used. For convenience, among the APNs that can be used by the wireless communication device 5 using the SIM 55, an APN with relatively low QoS is referred to as a low QoS-APN, and an APN with relatively high QoS is referred to as a high QoS-APN. The APN with low QoS corresponds to an APN that has a slow communication speed or is likely to cause communication delay due to, for example, the low priority of the data transfer in the core network 3 or a communication setting (in other words, a policy condition) such as no bandwidth guarantee. The low QoS-APN can be understood as an APN suitable for data communication that does not require much immediacy, such as uploading probe data, for example. On the other hand, the APN with high QoS is, paradoxically, an APN in which communication delays are less likely to occur. The high QoS-APN can be understood as an APN suitable for data communication requiring high immediacy such as remote control of the vehicle.

Here, in one example, it is assumed that the SIM 55 is set to be able to use multiple APNs with different QoS. However, the present disclosure is not limited to this example. The SIM 55 may use only one APN. However, in order to flexibly respond to various communication requests from the in-vehicle device 6, it is preferable that the wireless communication device 5 is able to use multiple APNs. Further, the wireless communication device 5 may have multiple SIMs 55.

The automated driving device 6A is a device that executes part or all of the driving operation instead of the user by controlling a traveling actuator based on detection results of surrounding monitoring sensors such as an in-vehicle camera and a millimeter wave radar. The traveling actuator includes, for example, a brake actuator as a braking device, an electronic throttle, a steering actuator, and the like. The surrounding monitoring sensors are sensors that detect an object or the like existing in the vicinity of a subject vehicle. As the surrounding monitoring sensors, for example, a camera, a millimeter wave radar, a LiDAR (Light Detection and Ranging/Laser Imaging Detection and Ranging), or a sonar can be adopted.

The automated driving device 6A sequentially transmits, as the traveling state report, a data set indicating situations inside the vehicle and outside the vehicle during automated driving to the automated driving management center 4A via the wireless communication device 5. The situation inside the vehicle during the automated driving can include an operation state of the automated driving device 6A and a state of an occupant. The data indicating the operation state of the automated driving device 6A also includes a recognition result of the surrounding environment with respect to the automated driving device 6A, a traveling plan, a calculation result of the target control amount of each traveling actuator, and the like. The automated driving device 6A outputs various data related to the automated driving described above to the wireless communication device 5 periodically or when a predetermined report event occurs.

Further, the automated driving device 6A may receive real-time information (hereinafter, referred to as control support information) that serves as a reference for generating a control plan from the automated driving management center 4A by wireless communication. The control support information is, for example, information indicating the current position, movement speed, traveling direction, and the like of other mobile bodies existing around the vehicle. The control support information may include information about semi-dynamic map elements such as, for example, sections with traffic restrictions, end positions of traffic jams, positions of fallen objects on the road, and the like. In that case, the wireless communication device 5 receives data as the control support information from the automated driving management center 4A and outputs it to the automated driving device 6A. A data set as the control support information corresponds to one example of vehicle control data. Further, the automated driving device 6A corresponds to a vehicle control device.

The navigation device 6B is an in-vehicle device 6 that cooperates with an HMI (Human Machine Interface) system including a display and performs route guidance to a destination set by an occupant. The navigation device 6B executes route guidance process using, for example, a map downloaded from the map server 4B. Based on a request from the navigation device 6B, the wireless communication device 5 downloads map data corresponding to the current position of the vehicle or a traveling plan route from the map server 4B, and provides the map data to the navigation device 6B.

The probe device 6C generates probe data which is data for the map server 4B to generate and update the map data based on the detection result of the surrounding monitoring sensor, and uploads it to the map server 4B via the wireless communication device 5. The probe device 6C sequentially transmits, for example, a data set indicating an observation position of a feature identified by the surrounding monitoring sensor to the map server 4B as probe data. The probe data corresponds to packaged data of, within a certain time (for example, 400 milliseconds), recognition results of landmarks or the like such as lane markings, road signs, and traffic lights. The probe data may include, for example, transmission source information, traveling track information, traveling route information, and feature information. The traveling track information is information indicating a track on which a subject vehicle has traveled. The feature information indicates observation coordinates of features such as landmarks. Further, the probe data may include vehicle behavior information such as vehicle speed, steering angle, yaw rate, turn signal operation information, wiper operation information, and the like.

Devices corresponding to the in-vehicle devices 6 are not limited to those exemplified above. Various in-vehicle devices 6 can be directly or indirectly connected to the wireless communication device 5. For example, the in-vehicle devices 6 can include a driving support device, a drive recorder, an emergency call device, a self-diagnostic device (so-called OBD which is an abbreviation for OnBoard Diagnostics), and the like.

Further, the vehicle may also be remotely operated by an operator at a remote control center. For example, the in-vehicle communication system 1 may include a vehicle remote control device as the in-vehicle device 6. When the vehicle is remotely controlled, the wireless communication device 5 promptly receives remote control data transmitted from the remote control center and provides it to the vehicle remote control device. The vehicle remote control device controls the behavior of the vehicle by outputting control signals to various traveling actuators based on signals from the remote control center. Further, the vehicle remote control device outputs images such as in-vehicle camera images and sensor data indicating the traveling state such as vehicle speed sensors to the wireless communication device 5 for transmitting the images and the data to the remote control center. Note that the vehicle remote control device may be integrated with the automated driving device 6A. The vehicle control data includes the remote control data transmitted from the remote control center, the in-vehicle camera images transmitted to the remote control center, and the like. The various in-vehicle devices 6 and the wireless communication device 5 multiplex various data according to a predetermined method, and transmit and receive the multiplexed data.

### <Functions of wireless communication device 5>

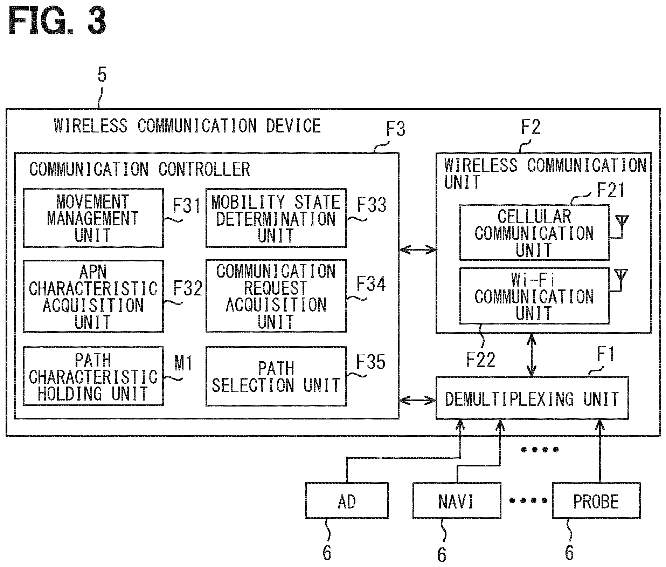

Here, functions and operations of the wireless communication device 5 will be described. As shown in FIG. 3, the wireless communication device 5 includes, as functional blocks, a demultiplexing unit F1, a wireless communication unit F2, and a communication controller F3. The wireless communication unit F2 includes a cellular communication unit F21 and a Wi-Fi communication unit F22.

The demultiplexing unit F1 receives transmission data output by each in-vehicle device 6, outputs the data to the wireless communication unit F2, and outputs the data received by the wireless communication unit F2 to the in-vehicle device 6 that should receive the data. For example, the demultiplexing unit F1 acquires the original data by demultiplexing the data which is multiplexed and input from each in-vehicle device 6 with use of a predetermined method. The demultiplexing unit F1 includes a buffer which is a storage area for temporarily holding data input from each in-vehicle device 6 until the data is wirelessly transmitted to the cellular base station 2 or the Wi-Fi base station 7. The buffer may be implemented using a rewritable storage medium such as RAM. The demultiplexing unit F1 also has a function of monitoring the amount of data retained in the buffer and information stored in headers of those data.

The data stored in the buffer are sequentially retrieved by the wireless communication unit F2 and transmitted to the external device 4 which is a destination of a communication path according to the data input source (that is, the in-vehicle device 6). The communication path here corresponds to each APN and Wi-Fi, and the communication path can also be understood as a wireless communication service. An allocation state of the communication path for each in-vehicle device 6 is controlled by the communication controller F3. Here, it is assumed that the data communication path is controlled for each in-vehicle device 6. However, the present disclosure is not limited to this control. The wireless communication device 5 may switch the communication path for each application software. A method of allocating the communication path for each in-vehicle device 6 will be described later.

The cellular communication unit F21 is a communication module that takes charge of a physical layer in a wireless communication protocol such as LTE, for example. The cellular communication unit F21 includes an antenna that can transmit and receive radio waves in the frequency band used in LTE, and a transceiver that executes signal processing equivalent to conversion from baseband signals to high-frequency signals and vice versa in accordance with LTE communication standards. Note that multiple antennas may be provided for reception diversity and the like.

The cellular communication unit F21 generates a carrier wave signal corresponding to the input data by executing processes such as encoding, modulation, and digital-to-analog conversion on the data input from the demultiplexing unit F1. Then, the generated carrier wave signal is output to an antenna to be radiated as radio waves. Further, the cellular communication unit F21 executes a predetermined process such as an analog-to-digital conversion process and a demodulation process on the reception signal received by the antenna, thereby converting it into an information series (that is, digital data) represented by digital values. Then, data corresponding to the reception signal is output to the demultiplexing unit F1.

The Wi-Fi communication unit F22 is a communication module for connecting to the Internet via the Wi-Fi base station 7 and communicating with the external device 4. The Wi-Fi communication unit F22 is configured using, for example, an antenna for transmitting and receiving radio waves in the frequency band used in the Wi-Fi standard, such as the 2.4 GHz band and the 5 GHz band, a modulation circuit, a demodulation circuit, and the like. The Wi-Fi communication unit F22 radiates wireless signals corresponding to the data input from the demultiplexing unit F1 or the communication controller F3. Further, the Wi-Fi communication unit F22 outputs data corresponding to the reception signal received by the antenna to the demultiplexing unit F1 or the communication controller F3. The Wi-Fi communication corresponds to the short-range communication. Further, the Wi-Fi communication unit F22 corresponds to a short-range communication unit.

Note that the Wi-Fi communication unit F22 recognizes the presence of the Wi-Fi base station 7 by receiving a beacon emitted from the Wi-Fi base station 7. Communication connection between the Wi-Fi communication unit F22 and the Wi-Fi base station 7 is controlled by the communication controller F3.

The communication controller F3 monitors and controls the communication state of the wireless communication service corresponding to each APN. The communication controller F3 transmits an attach request including SIM information to the MME 31 for each APN, for example, when a vehicle power source is turned on. Further, notification of the APN based on the request from the MME 31 constructs a PDN connection for each APN. Note that the MME 31 establishes a PDN connection including a radio bearer in cooperation with the S-GWand P-GW, in accordance with the APN notified from the wireless communication device 5. Hereinafter, for convenience, the cellular base station 2 to which the wireless communication device 5 is connected based on the information of the SIM 55 is also referred to as a connection station. The connection station, in other words, corresponds to the cellular base station 2 forming the serving cell. The vehicle power source here may be an accessory power source or a power source for traveling. The power source for traveling is a power source for vehicle traveling, and indicates an ignition power source when the vehicle is a gasoline vehicle. When the vehicle is an electric vehicle or a hybrid vehicle, the power source for traveling refers to a system main relay.

Further, the communication controller F3 controls the operation of the Wi-Fi communication unit F22. The communication controller F3 starts communication connection with the Wi-Fi base station 7 based on the reception of the beacon by the Wi-Fi communication unit F22. When establishing a communication connection with the Wi-Fi base station 7, control signals are exchanged for IP address acquisition and security setting (exchange of encryption keys, and the like). Therefore, on the whole, the communication speed may be faster in the cellular communication when the stay time in the communication area WCR is relatively short, such as when the vehicle is moving at high speed. This is because in the cellular communication, communication settings such as settings of the IP address are maintained even when the serving cell changes.

Further, the communication controller F3 includes, as functional units, a movement management unit F31, a mobility state determination unit F33, a communication request acquisition unit F34, and a path selection unit F35. Further, the communication controller F3 includes a path characteristic holding unit M1 implemented using a rewritable storage medium such as the RAM 52, for example.

The movement management unit F31 specifies the serving cell corresponding to the APN specified by the SIM 55 and executes cell movement management. The movement management unit F31 calculates RSRP, RSSI, and RSRQ for each cell as indices for selecting the serving cell. The RSRP is an abbreviation for Reference Signal Received Power. The RSSI is an abbreviation for Received Signal Strength Indicator. The RSRQ is an abbreviation for Reference Signal Received Quality.

The RSRP is the average reception power of RS per unit resource element. The average reception power corresponds to the average value of reception power observed within a predetermined period. Specifically, the RSRP is determined as the linear average of the reception power (W) of the resource elements carrying the RS. Calculation of the RSRP is performed in cooperation with the wireless communication unit F2. The RSRP may be a CRS average reception power or a CSI-RS average reception power (so-called CSI-RSRP).

The RSSI is a value obtained by measuring the power of the entire LTE system band in an OFDM symbol that accommodates the RS. In general, as traffic volume increases, resource allocation increases and the RSSI tends to increase. The RSRQ is an index representing the reception quality of RS, and a larger RSRQ indicates high reception quality. The RSRQ represents a ratio between the reception power of the cell-specific reference signal and the total power within a reception bandwidth. Specifically, the ratio is obtained by dividing, by RSSI, a value obtained by multiplying RSRP by the number of resource blocks. A method disclosed in Non-Patent Literature 1 can be used as a specific calculation method for the RSRP, the RSSI, and the RSRQ.

Then, the movement management unit F31 executes a process for switching the serving cell as necessary, based on an index such as RSRP for each cell corresponding to the SIM 55. A cell corresponding to a certain SIM 55 refers to a cellular base station that can be connected based on the information of the SIM 55 and its cell. The wireless communication device 5 and the network device cooperate to switch the serving cell. For example, when the wireless communication device 5 is in an idle mode, the wireless communication device 5 leads and switches the serving cell. Further, when the wireless communication device 5 is in a connected mode, the network device leads and switches the serving cell.

The process of switching the serving cell is also called handover. The handover includes handover within the same frequency, handover between different frequencies, handover from LTE to another system, and the like. The details of the handover can be changed as appropriate, and the method described in Non-Patent Literature 1 or the like can be adopted. Here, in one example, it is assumed that cell reselection in the idle mode is also included in the concept of handover. In other words, the cell reselection in the following can be read as handover. When executing the cell reselection, the movement management unit F31 notifies the mobility state determination unit F33 that the reselection is executed. A selection history of the serving cell is held in the RAM 52 or the like for a certain period.

The path characteristic holding unit M1 temporarily holds information such as RSPw and RSRP for each cell corresponding to each SIM 55, the information being acquired by the movement management unit F31. The information held by the path characteristic holding unit M1 is updated as needed by the movement management unit F31 and an APN characteristic acquisition unit F32.

The APN characteristic acquisition unit F32 acquires parameters related to communication settings for each APN that can be used with the SIM 55 from the network device. The communication setting parameters for each APN include an allocation frequency, presence or absence of bandwidth guarantee, priority of packet transfer, delay characteristic setting value (hereinafter, also referred to as delay threshold or dT), and the like. The allocation frequency, delay characteristic setting value, and the like directly or indirectly indicate the QoS of the communication path determined by the APN. The communication setting parameters acquired by the APN characteristic acquisition unit F32 are stored, for example, in the path characteristic holding unit M1.

The delay characteristic setting value is one parameter used for communication control, and is determined by the PCRF 35 at the time of communication connection between the wireless communication device 5 as the UE and the core network 3, for example. For example, at least one of the MME 31 or the cellular base station 2 notifies the wireless communication device 5 of the delay characteristic setting value determined by the PCRF 35. The delay characteristic setting value for each APN is provided by, for example, the PCRF 35 corresponding to each APN. Note that a configuration element that determines the delay characteristic setting value is not limited to the PCRF 35. The delay characteristic setting value may be determined by the cellular base station 2 based on information received from the core network 3.

The delay characteristic setting value is a parameter for the UE to verify whether transmission delay of communication packets occurs at an unexpected level, in other words, whether the QoS is ensured from the viewpoint of communication delay. In one aspect, the delay characteristic setting value corresponds to the upper limit value in an expected range of delay time of communication packets. A larger delay characteristic setting value means a larger expected communication delay time. An APN with a smaller delay characteristic setting value has a smaller allowable delay amount, that is, the APN has a higher real-time property. The APN here can be read as a communication path and implemented.

Further, the APN characteristic acquisition unit F32 evaluates the QoS of each communication line corresponding to each APN based on communication setting parameters such as, for example, the allocation frequency, which are acquired from the network device. In addition, the APN characteristic acquisition unit F32 may measure the communication speed for each communication line corresponding to each APN. Further, the APN characteristic acquisition unit F32 may evaluate QoS for each communication line corresponding to each APN based on the measurement value of the communication speed. The APN characteristic acquisition unit F32 may evaluate the QoS for each APN based on at least one of the communication setting parameter acquired from the network device or the communication speed observation value. The communication line here corresponds to a wireless communication service. Therefore, in one aspect, the APN characteristic acquisition unit F32 can be understood as a service quality evaluation unit that evaluates QoS for each wireless communication service. The APN characteristic acquisition unit F32 may be integrated with the movement management unit F31. The APN characteristic acquisition unit F32 corresponds to a path characteristic acquisition unit.

The mobility state determination unit F33 determines the mobility state for the wireless communication service designated by the SIM 55 based on the first upper limit number NH and the second upper limit number NM notified from the network device. As described above, the mobility state is a parameter that represents the frequency of times the reselection of the serving cell is performed within a predetermined time. The mobility state can be expressed in three levels using the above two thresholds. The three levels include, for example, a normal level (Normal), a middle level (Middle), and a high level (High). Note that the first upper limit number NH is set to a value larger than the second upper limit number NM. The normal level corresponds to the normal level, the middle level corresponds to the middle level, and the high level corresponds to the high level. Further, the normal level corresponds to a reference level. The high level means the highest mobility state, and a normal level means the lowest mobility state. In other words, a mobility state determination value has a relationship of normal level < middle level < high level.

Specifically, the mobility state determination unit F33 determines the mobility state as the high level when a cell reselection number exceeds the first upper limit number NH. The cell reselection number is the number of times the cell reselection is performed within the first observation time T_{CR}. Further, when the cell reselection number within the first observation time T_{CR} exceeds the second upper limit number NM and also is lower than the first upper limit number NH, the mobility state is determined as middle level.

Further, the mobility state determination unit F33 determines the mobility state as the normal level when the mobility state is not determined to be at the middle level or the high level within the second observation time T_{CRH}. That is, the mobility state determination unit F33 determines that the mobility state is at the normal level when the cell reselection number within the second observation time T_{CRH} continues to be equal to or lower than the second upper limit number NM. The mobility state determination result is held in the RAM 52 or the like for at least longer than the second observation time T_{CRH}.

As the first upper limit number NH, N_{CR_H}, which is a parameter included in system information distributed from the network device, can be adopted. Further, as the second upper limit number NM, N_{CR_M} notified as the system information can be adopted. As the first observation time T_{CR}, T_{CRmax}, which is a parameter included in the system information, can be adopted. As the second observation time T_{CRH}, T_{CRmaxHyst} included in the system information can be adopted.

Note that the high frequency of performed cell reselection indirectly indicates that the movement speed of the vehicle Hv is high. That is, the mobility state determination value can be interpreted as an index that indirectly indicates the movement speed of the vehicle Hv. Further, the higher the mobility state, the shorter the stay time for each cell. In addition, when the mobility state is high, the stay time in the communication area WCR formed by the Wi-Fi base station 7 is short and the environment of the Wi-Fi communication is harsh. In other words, when the mobility state is low, it can be expected that the stay time in the communication area WCR formed by the Wi-Fi base station 7 is long.

Determination of the mobility state in the wireless communication device 5 may be performed periodically, or may be triggered by reception of an inquiry from the network device. An internal calculation process such as the determination of the mobility state by the wireless communication device 5 may be triggered by occurrence of a predetermined event in the wireless communication device 5.

The mobility state determined by the wireless communication device 5 is reported to the network device. The network device may determine the allocation state of the connection cell or the wireless communication resource or the like based on the mobility state reported from the wireless communication device 5. Further, the mobility state determined by the mobility state determination unit F33 is also referred by the movement management unit F31 or the path selection unit F35. The determination result of the mobility state determination unit F33 may be used for the cell reselection process by the movement management unit F31 or the like, for example.

The communication request acquisition unit F34 acquires a delay request which is a request quality related to data transmission delay from each in-vehicle device 6. The delay request is expressed, for example, by a numerical value (hereinafter, referred to as a delay allowable value) indicating an allowable delay time for the in-vehicle device 6. The delay allowable value can be set to a numerical number indicating a length of time such as, for example, 100 milliseconds. A smaller delay allowable value indicates that immediacy is required. The communication request acquisition unit F34 corresponds to a delay allowable amount acquisition unit. The delay allowable value corresponds to a delay allowable amount.

Note that the length of allowable delay time may be expressed in terms of levels. For example, a delay allowable level representing a length of the allowable delay may be expressed in four stages of first to fourth levels. Also when the length of allowable delay time is expressed in terms of levels, the allowable delay time becomes shorter as the level number becomes smaller. For example, the first level corresponds a delay request for delay time of less than 100 milliseconds, and the second level corresponds to a delay request for a delay time of 300 milliseconds or less. Further, the third level corresponds a delay request for delay time of less than 1000 milliseconds, and the fourth level corresponds to a delay request for a delay time of 1000 milliseconds or more.

The delay request of each in-vehicle device 6 is input, as a predetermined control signal, from the in-vehicle device 6, for example. For example, the in-vehicle device 6 is connected to the wireless communication device 5 to communicate each other when the vehicle power source is turned on. When the communication connection is established, the in-vehicle device 6 may notify the wireless communication device 5 of the delay request. Alternatively, the in-vehicle device 6 may notify the wireless communication device 5 of the delay request based on, in the in-vehicle device 6, the occurrence of communication traffic (in other words, transmission data) for the external device 4. The delay request may be specified for each communication traffic. Note that the delay request may be acquired by the wireless communication device 5 inquiring of each in-vehicle device 6 about the delay request at a predetermined timing or periodically. In addition, the delay request may be written in a header or the like of data transmitted from each in-vehicle device 6 to the wireless communication device 5. Note that the delay request may be set for each application software that the in-vehicle device 6 is executing.

In addition, the communication request acquisition unit F34 acquires a parameter related to a mode of communication with the external device 4 from each in-vehicle device 6. The parameter is different from the delay allowable value. For example, the communication request acquisition unit F34 acquires the upper limit value of an allowable packet error rate, a resource type related to the bandwidth guarantee, and the like. The resource type related to the bandwidth guarantee includes, for example, whether the bandwidth is guaranteed. Note that parameters such as the upper limit value of the packet error rate and the resource type may be acquired from the core network 3. In addition, the resource type related to the packet error rate and the bandwidth guarantee may be determined by the communication request acquisition unit F34 based on the type of data input from the in-vehicle device 6, and the like.

The path selection unit F35 selects the communication path used for data communication of each in-vehicle device 6 based on the determination result of the mobility state determination unit F33 and the real-time property of communication requested by each in-vehicle device 6. The path selection unit F35 corresponds to a communication path selection unit. Details of the operation of the communication controller F3 will be described later.

### <Wireless communication path allocation process>

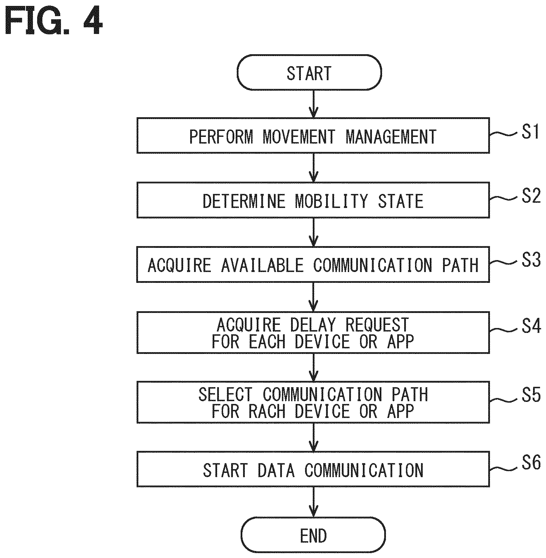

Here, a path selection process executed by the wireless communication device 5 will be described with reference to a flowchart of FIG. 4. Note that the flowchart of FIG. 4 is executed sequentially at predetermined intervals, such as, for example, every 4 seconds or 10 seconds. Alternatively, the flowchart of FIG. 4 may be executed in response to the occurrence of a predetermined event such as, for example, a case where the vehicle Hv stops or a handover is performed. Further, the flowchart may be executed when the transmission data is input from the in-vehicle device 6. Furthermore, the flowchart may be executed when the vehicle enters the communication area WCR of the Wi-Fi base station 7. In other words, the flow may start when the Wi-Fi communication unit F22 may receive a beacon including a predetermined SSID from the Wi-Fi base station 7.

For simplicity of explanation, a case where the wireless communication device 5 is able to use two APNs of APN_1 and APN_2, by using the SIM 55 will be described as an example.

First, in step S1, the movement management unit F31 executes movement management process which is a process related to reselection of the serving cell. For example, the movement management unit F31 determines whether cell reselection is necessary based on the RSRP and RSRQ, priority of allocation frequencies, and the like of each cell corresponding to the SIM 55. When, based on the RSRP and RSRQ of each cell, there is a cell that can be expected to have high communication quality than the current serving cell, the cell reselection is performed in cooperation with the network device. Also when there is a cell to which the frequency having the priority higher than that of the serving cell is allocated, similarly, the cell reselection may be performed. That is, the movement management unit F31 compares the communication qualities of the serving cell and the surrounding cell or the like, and performs the cell reselection when there is a cell that satisfies a specific condition. Note that the movement management process may include a process of transmitting a RRC message for the cell reselection to the network device or the like. The step S1 corresponds to a movement management step.

In step S2, the mobility state determination unit F33 determines the mobility state of the cellular line corresponding to the SIM 55 based on information which is provided from the movement management unit F31 and indicates a history of the cell reselection. Note that the information of the determined mobility state is reported, as the RRC message, to the network device at a predetermined timing such as, for example, a timing when the current state becomes the RRC connection state. The step S2 corresponds to a mobility state determination step.

In step S3, the APN characteristic acquisition unit F32 acquires communication setting parameters for each APN from the network device, and evaluates QoS for each wireless communication service corresponding to each APN. For example, an APN whose delay characteristic setting value is set to be lower than a predetermined low delay threshold is set to the high QoS-APN. Further, an APN whose delay characteristic setting value is equal to or higher than the predetermined low delay threshold is set to the low QoS-APN. For example, 150 milliseconds, 200 milliseconds, 300 milliseconds, and the like can be adopted as the low delay threshold. Here, in one example, the APN_1 corresponds to the low QoS-APN, and the APN_2 corresponds to the high QoS-APN.

Note that the granularity of determination of QoS for each APN is not limited to two stages of high level and low level. The level of QoS may be expressed in three levels of high, middle, and low. Further, the QoS may be expressed in levels such as 1 to 4. In that case, the higher the level value, the higher the QoS. Further, here, in one example, a mode of evaluating QoS based on the delay characteristic setting value is exemplified. However, the present disclosure is not limited to this example. The APN characteristic acquisition unit F32 may evaluate the QoS of each APN based on the priority of packet transfer, the presence or absence of bandwidth guarantee, and the allocation frequency. The APN characteristic acquisition unit F32 may evaluate the level of QoS for each wireless communication service corresponding to each APN by combining multiple types of items. Evaluating the QoS of a wireless communication service corresponding to a certain APN may be equivalent to evaluating the expectation value of the communication speed of the wireless communication service. The QoS of the present disclosure can be implemented in place of communication speed.

Note that the acquisition process of the communication setting parameter may be omitted when the communication setting parameter for each APN has been acquired at the time of establishing the communication line and also the parameter does not change depending on time. Further, dynamically changing parameters may be acquired and updated periodically or when a predetermined event occurs.

Further, in step S3, the communication controller F3 cooperates with the Wi-Fi communication unit F22 to determine whether the Wi-Fi communication can be performed. The step S3 corresponds to a path characteristic acquisition step. When the process in step S3 is completed, the process shifts to step S4.

In step S4, the communication request acquisition unit F34 acquires the delay allowable value from each in-vehicle device 6, and the process shifts to step S5. For convenience, a delay allowable value of the automated driving device 6A is referred to as DA_A, a delay allowable value of the navigation device 6B is referred to as DA_B, and a delay allowable value of the probe device 6C is referred to as DA_C. In one example, the delay allowable value as the delay request of each in-vehicle device 6 is set to a value having a relationship of DA_A < DA_B < DA_C. For example, the delay allowable value DA_A of the automated driving device 6A may be set to 100 milliseconds or the like. The delay allowable value DA_B of the navigation device 6B can be set to a value such as, for example, 500 milliseconds which is relatively larger than the delay allowable value DA_A of the automated driving device 6A. The delay allowable value DA_C of the probe device 6C may be set to, for example, 2000 milliseconds. Note that the numerical values described above are examples and can be changed as appropriate. The step S4 corresponds to a delay allowable amount acquisition step.

Hereinafter, for convenience, data communication, in which the delay allowable value is set to be equal to or higher than a predetermined short-range communication allowable threshold, is also referred to as delay allowable communication. Further, the in-vehicle device 6, which allows a delay equal to or higher than the short-range communication allowable threshold described above, is also referred to as a delay allowable device. For example, the short-range communication allowable threshold is set to 1000 milliseconds. Therefore, in the above example, the probe device 6C may correspond to the delay allowable device. Of course, the short-range communication allowable threshold may be 500 milliseconds, 2000 milliseconds, or the like. Note that delay allowable communication in the present disclosure corresponds to data communication to which the Wi-Fi communication is applicable, as described later. Therefore, the delay allowable communication can be read as Wi-Fi applicable communication. Similarly, the delay allowable device can be read as a Wi-Fi applicable device.

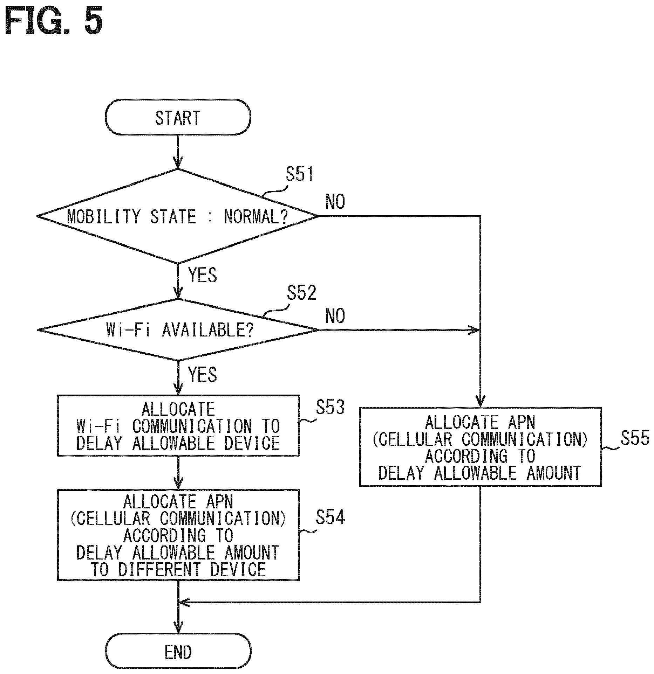

In step S5, the path selection unit F35 executes the allocation process which is a process for selecting a communication path for each in-vehicle device 6, based on the mobility state determined in step S2. One example of an execution procedure of the allocation process will be described with reference to a flowchart shown in FIG. 5. In one example of the present disclosure, the path allocation process includes steps S51 to S55. The allocation process shown in FIG. 5 is executed as step S5 of FIG. 4. Each step can be executed by the path selection unit F35. Of course, the number of steps included in the allocation process, the order of processes, the subject of execution, and the like can be changed as appropriate. The step S5 corresponds to a communication path selection step.

First, in step S51, the mobility state determination unit F33 determines whether the mobility state is at the normal level. When the mobility state is determined to be at the normal level, the determination in step S51 is positive, and the process shifts to step S52. On the other hand, when the mobility state is determined to be at the middle level or the high level, the determination in step S51 is negative, and the process shifts to step S55.

In step S52, it is determined whether the Wi-Fi communication is available. When the Wi-Fi communication is available, the determination in step S52 is positive, and the process shifts to step S53. On the other hand, when the Wi-Fi communication is unavailable, the process shifts to step S55.

In step S53, the Wi-Fi communication is allocated to the in-vehicle device 6 that performs delay allowable communication. For example, in the above example, the Wi-Fi communication is allocated to the probe device 6C. Note that, when there are multiple delay allowable devices, the Wi-Fi communication as a communication path can be allocated to any of them. When step S53 is completed, the process shifts to step S54.

In step S54, an APN corresponding to the delay allowable value is allocated to the in-vehicle device 6 other than the delay allowable device. For example, APN_2 which is the high QoS-APN is allocated to the automated driving device 6A having the relatively small delay allowable value among the remaining in-vehicle devices 6 of the automated driving device 6A and the navigation device 6B. Further, the APN_1 which is the low QoS-APN is allocated to the navigation device 6B having the relatively large delay allowable value. That is, the APN with the high QoS is preferentially allocated to the in-vehicle device 6 having the small delay allowable value among the in-vehicle devices 6 different from the delay allowable device.

Allocating a certain APN to a certain device corresponds to allocating a wireless communication service according to the APN as a communication path of the device. Further, when the APN_2 has the remaining capacity for the communication speed even in a state where the APN_2 is allocated to the automated driving device 6A, the APN_2 may be allocated to also the navigation device 6B. Multiple in-vehicle devices 6 may be allocated to one APN in a range where the communication speed is allowed. When step S54 is completed, the process shifts to step S6 of FIG. 4.

In step S55, the APN corresponding to the delay allowable value is allocated to each in-vehicle device 6. That is, the APN with the high QoS is preferentially allocated to the in-vehicle device 6 having the small delay allowable value. For example, the APN_2 which is the high QoS-APN is allocated to the automated driving device 6A. Further, the APN_1 which is low QoS-APN is allocated to the probe device 6C. The communication path allocated to the navigation device 6B may be either APN_1 or APN_2. As described above, it is preferable that, when the APN_2 has the remaining capacity for the communication speed even in a state where the APN_2 is allocated to the automated driving device 6A, the APN_2 is allocated to the navigation device 6B. When step S55 is completed, the process shifts to step S6 of FIG. 4.

In step S6, the communication controller F3 notifies the wireless communication unit F2 of the communication path for each in-vehicle device 6 determined in step S5, and applies it as the communication path for each in-vehicle device 6. Thereby, data input from each in-vehicle device 6 is transmitted through the communication path allocated to the input source. Note that, here, in one example, the communication path for each in-vehicle device 6 determined in step S5 is immediately applied. However, the present disclosure is not limited to the example. For example, the actual change of the communication path in step S6 may be put on hold until the vehicle stops or the communication between the automated driving device 6A and the automated driving management center 4A is completed.

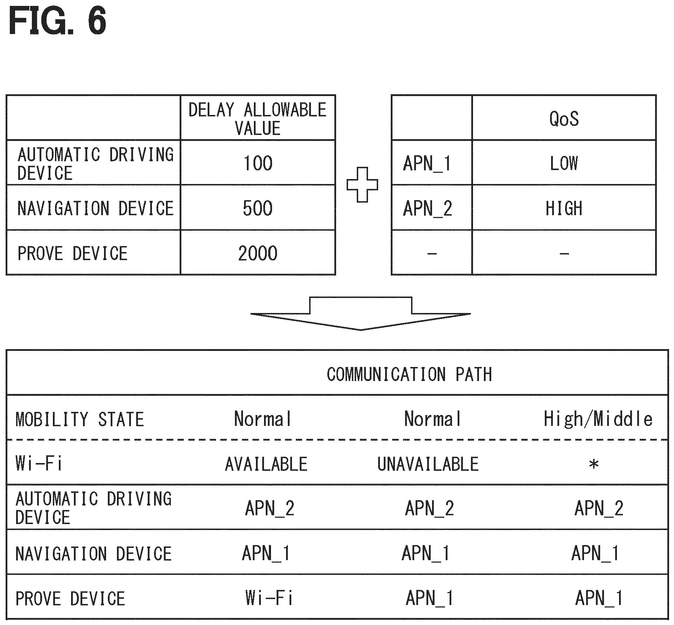

FIG. 6 is a diagram for summarizing the allocation mode of the communication path for each in-vehicle device 6 according to the mobility state and the availability of the Wi-Fi communication that are determined by the above processes. As shown in FIG. 6, in an embodiment where the mobility state is at the normal level (Normal) and also the Wi-Fi is available, the Wi-Fi communication is adopted as the communication path of the probe device 6C which is the delay allowable device. On the other hand, when the mobility state is at the high or middle level (High/Middle), the cellular communication, more preferably, a cellular communication using the low QoS-APN is adopted as the communication path of the probe device 6C which is the delay allowable device, regardless of the availability of the Wi-Fi.

Further, in an environment where the mobility state is at the normal level (Normal) and also Wi-Fi is not available, the cellular communication using low QoS-APN is adopted as the communication path of the probe device 6C which is the delay allowable device. As for the automated driving device 6A and the navigation device 6B other than the delay allowable device, the smaller the delay allowable value, the more preferentially the cellular communication corresponding to the APN with the higher QoS is allocated. That is, the processes are controlled so that a communication path option of the delay allowable device includes the Wi-Fi communication and a communication path option of the in-vehicle device other than the delay allowable device does not include the Wi-Fi communication.

### <Effects of above configuration>

The configuration described above uses the cellular communication and the Wi-Fi communication that correspond to multiple APNs in parallel for the entire vehicle, and determines the allocation of the communication path for each in-vehicle device 6 based on the mobility state. Specifically, when the mobility state is at the normal level and also the Wi-Fi communication is available, the path selection unit F35 applies the Wi-Fi communication as the communication path of the delay allowable device. Further, when the mobility state is at the high level, the APN using the cellular communication is applied as the communication path of the delay allowable device even if the Wi-Fi communication is available.

A case where the mobility state is at the high level corresponds to a case where, basically, the vehicle Hv is moving at high speed. Therefore, even if Wi-Fi is available, the stay time in the Wi-Fi communication area is relatively short. The communication efficiency may decrease for the processing time for the communication connection such as security settings. On the other hand, in the cellular communication using the APN, even when the handover due to the movement occurs, IP address and the like are maintained. Therefore, when the mobility state is at the high level, the efficiency of the cellular communication may be higher than the Wi-Fi. That is, it can be understood that, as compared with the Wi-Fi communication, the cellular communication path is a communication path which is less likely to cause the decrease in the communication efficiency due to the movement or a communication path which is robust against the movement.

The present disclosure was created by paying attention to the characteristics of each communication path as described above. According to the above configuration, the Wi-Fi communication that does not need the communication costs is allocated to the delay allowable device in the environment which is less likely to cause the decrease in the communication efficiency due to the movement. Further, in the environment causing the decrease in the communication efficiency due to the movement, the cellular communication, which needs the communication costs but is robust against the movement, is allocated to the delay allowable device. Thereby, it may be possible to suppress the communication cost while suppressing deterioration of communication efficiency due to movement.

Further, in a configuration where multiple APNs are available as in the present embodiment, the APN with the relatively small QoS is allocated to the delay allowable device when the mobility state is at the middle or high level. This makes it possible to allocate the APN with the relatively high QoS to the remaining in-vehicle device 6. Further, as a result, it may be possible to reduce the risk of occurrence of communication that does not satisfy the required quality related to the delay for each in-vehicle device 6. That is, in the configuration using multiple APNs in parallel, it may be possible to suppress the total of delay time exceeding the allowable range of each in-vehicle device 6 for the entire system including multiple in-vehicle devices 6, by allocating the communication path according to the delay request for each in-vehicle device 6. In other words, when it is necessary to parallelly execute multiple types of data communications each having a different request related to the communication delay time or the like, it may be possible to improve the entire communication efficiency by using multiple communication services according to data communication types.

By the way, as a comparative configuration which is another configuration that can selectively use Wi-Fi communication and cellular communication, a configuration, in which the executed data communication of the in-vehicle device 6 having the small delay allowable value is the Wi-Fi communication, is assumed. However, as described above, when the mobility state is at the high level or the middle level, a continuation time of the Wi-Fi communication possible state is short. Therefore, it is not always possible to transmit and receive data as much as expected with the Wi-Fi communication. That is, from the viewpoint of communication cost reduction, the expected effect is not always obtained. Further, by switching from the cellular communication to the Wi-Fi communication, the communication delay may become a difficulty. In particular, vehicle control related data communication such as automated driving and vehicle remote control requires an extremely high real-time property. Therefore, the delay at the Wi-Fi connection is regarded as more significant difficulty.

The path allocation process of the present embodiment was created by paying attention to the above difficulties. Even in a situation where Wi-Fi communication is possible, all data communication is not performed by Wi-Fi, and only the data communication of which delay allowable value is set to a predetermined value or more is performed by Wi-Fi. In other words, for data communication of which delay allowable value is lower than the predetermined value, such as data communication for the automated driving and data communication for the vehicle remote control, switching to the Wi-Fi is not performed and the cellular communication is maintained. According to such a configuration, it may be possible to reduce the risk of occurrence of communication delay due to the communication media switching in the high urgent data communication.

Note that the high urgent data communication includes data communication with high immediacy (so-called real-time nature). The high urgent data communication is, for example, data communication that requires a maximum delay time of 100 milliseconds or less. Specifically, the data communication for the vehicle control such as the automated driving, the driving support, and the remote control, data communication related to operation management of the automated driving vehicle, and the like correspond to the high urgent data communication. That is, data input from the automated driving device 6A or the driving assistance apparatus, or the vehicle remote control device corresponds to data with large necessity of suppressing the communication delay. The in-vehicle device 6 which executes the vehicle control based on signals from the external device 4, such as the automated driving device 6A, the driving assistance apparatus, or the vehicle remote control device, corresponds to a vehicle control device.

Paradoxically, data communication with low urgency includes, for example, communication related to transmission and reception of map data, communication for uploading probe data to the map server 4B, transmission and reception of software update programs, and the like. In a configuration in which audio equipment installed in a vehicle acquires music data from a cloud server and reproduces it, communication for downloading the music data can also be said to be the data communication with low urgency. However, even in data communication related to multimedia such as the music data and moving image data, user convenience may be impaired if the reproduction of music or the moving image is stopped in the middle. Therefore, the data communication related to the multimedia corresponds to data communication that requires the higher immediacy than the communication for transmitting and receiving the probe data or the map data.

While the embodiment of the present disclosure has been described above, the present disclosure is not limited to the embodiment described above, and various modifications to be described below are included in the technical scope of the present disclosure, and may be implemented by various modifications within a scope not departing from the spirit in addition to the modifications to be described below. For example, various modifications to be described below can be executed in combination as appropriate within a scope that does not cause technical inconsistency. The members having the same functions as those described in the embodiment described above are denoted by the same reference numerals, and the description of the same members will be omitted. When only a part of a configuration is described, the configuration described in the preceding embodiment can be applied to the other parts.

For example, in the above description, when there are multiple in-vehicle devices 6 that do not correspond to delay allowable devices, the APN with the high QoS is preferentially allocated to the in-vehicle device 6 with the small delay allowable value. However, the present disclosure is not limited to this. The APN for each in-vehicle device 6 may be allocated using parameters other than QoS. For example, when there are multiple in-vehicle devices 6 that do not correspond to the delay allowable devices, the APN with a low allocation frequency is preferentially allocated to the in-vehicle device 6 with the small delay allowable value.

Further, in the above description, the normal level is used as the reference level for enabling Wi-Fi communication to be selected as the communication path. However, the reference level may be the middle level. In a configuration that employs the middle level as the reference level, the delay allowable communication is performed by Wi-Fi communication on condition that the mobility state is at the middle level or normal level.

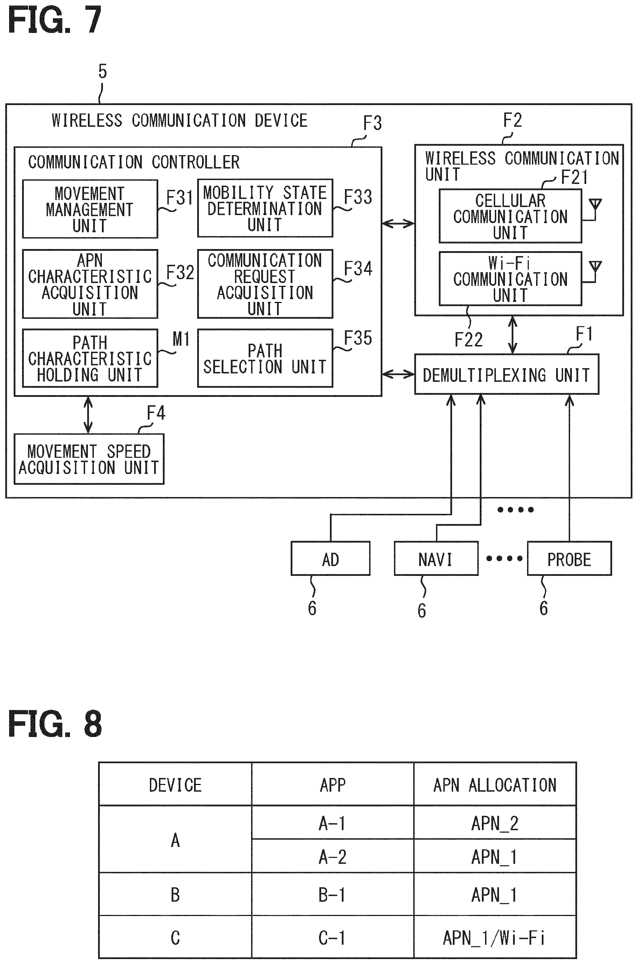

In addition, as shown in FIG. 7, the wireless communication device 5 includes a movement speed acquisition unit F4 that acquires the movement speed of the vehicle Hv, and may change the operation mode according to the movement speed acquired by the movement speed acquisition unit F4. The movement speed acquisition unit F4 may acquire the movement speed from the vehicle speed sensor, the automated driving device 6A, and the like, and may estimate the movement speed based on the Doppler shift amount of the signal from the cellular base station 2.

For example, according to the movement speed acquired by the movement speed acquisition unit F4, the APN characteristics acquisition unit F32 may reverse an evaluation policy for the allocation frequency at the time of evaluating the QoS for each APN. Specifically, it may be determined that the higher the frequency, the higher the QoS when the vehicle is being stopped or traveling slowly, and it may be determined that the lower the allocation frequency, the higher the QoS during normal traveling.

Here, the state where the vehicle is traveling slowly refers to a state where the movement speed is equal to or lower than a predetermined slow traveling speed, such as 10 km/h or the like. The state where the vehicle is traveling slowly can also include a state of the autonomous driving for parking. Further, the state of normal traveling is a state where the movement speed exceeds the slow traveling speed, and includes a state of high-speed traveling. Note that the state of high-speed traveling refers to, for example, a state where the vehicle speed exceeds a predetermined speed threshold such as 60 km/h or 80km/h.

The reason why QoS is considered to be higher as the allocation frequency is lower during the normal traveling is as follows. Generally, when the communication environment is stable, the higher the frequency, the higher the communication speed. However, since a vehicle moves at a relatively high speed as compared with a pedestrian or the like, the degree of change in position relative to the cellular base station 2 is large. The higher the frequency, the larger the degree of fluctuations in the communication environment. Therefore, in a technical field of the wireless communication between the vehicle and the external device, the overall communication speed decreases as the frequency increases. However, the communication speed does not always decrease as the frequency increases. When the vehicle is stopped or the like, the degree of change in the relative position of the vehicle Hv with respect to the cellular base station 2 is small, so the communication speed may increase as the allocation frequency increases.

The above control mode was created by paying attention to the above difficulties. During the normal traveling, the degree of evaluation of the QoS increases as the allocation frequency decreases. On the other hand, when the vehicle is traveling slowly or being stopped, the degree of evaluation of the QoS increases as the allocation frequency increases. According to the configuration, it may be possible to appropriately evaluate the QoS for each APN, in other words, the communication speed in a vehicle whose positional relationship with the cellular base station 2 is likely to change. Further, as a result, the communication path for each in-vehicle device 6 can be allocated more appropriately.

According to the similar technical idea, based on the determination that mobility state determined by the mobility state determination unit F33 corresponds to any one of the normal level, the middle level, and the high level, the APN characteristic acquisition unit F32 may reverse the evaluation policy for the allocation frequency at the time of evaluating the QoS for each APN. Specifically, when the mobility state is at the normal state, it may be determined that the QoS increases as the frequency increases. On the other hand, when the mobility state is at the middle level or the high level, it may be determined that the QoS increases as the allocation frequency decreases.

Further, when the Wi-Fi communication is possible and also the vehicle Hv is stopped or traveling slowly, it can be expected that the stay time of the vehicle Hv in the communication area WCR of the Wi-Fi base station 7, in other words, the Wi-Fi communication possible time becomes long. Therefore, when the vehicle is being stopped or traveling slowly, the range of data communication applicable to the Wi-Fi communication may be expanded. For example, the short-range communication allowable threshold that specifies delay allowable communication is set to 1000 milliseconds during the normal traveling. On the other hand, the short-range communication allowable threshold may be set to 500 milliseconds when the vehicle is being stopped or traveling slowly.

In addition, the communication controller F3 may measure the communication speed of the Wi-Fi communication by using a predetermined application when the Wi-Fi communication is possible. In this case, the path selection unit F35 may perform the setting of the communication path of the delay allowable device on condition that the communication speed of the Wi-Fi communication is equal to or higher than the predetermined threshold. As the communication speed of Wi-Fi communication, a download speed and an upload speed may be acquired. The path selection unit F35 may determine whether to perform the switching to Wi-Fi communication according to communication characteristics such as whether the delay allowable communication is mainly downlink communication or uplink communication.

By the way, when changing the APN allocated to a certain in-vehicle device 6, communication may be momentarily interrupted. This is because when the APN used for communication between a certain in-vehicle device 6 and a certain external device 4 is changed, a search and setting of a communication path using the new APN is performed from the in-vehicle device 6 to the external device 4. The resetting of the communication path is implemented by exchanging control signals between the core network 3 and the wireless communication device. Specifically, since the IP address and port number applied to data communication change as a result of path selection, control signals are exchanged between the network and the wireless communication device 5 to ensure consistency of the communication settings such as the IP address.

Focusing on such a difficulty, while data communication for vehicle control is performed, or while the vehicle travels, it is preferable that the execution of a path change process is suspend. The path change process is a process of changing the APN allocation to the vehicle control device such as the automated driving device 6A. For example, it is preferable that the path change process for the automated driving device 6A is executed on condition that the automated driving device 6A is not performing the data communication with the automated driving management center 4A, the vehicle is being stopped, or the like. According to the configuration, it may be possible to reduce the risk of communication suspension while the data communication with high urgency is performed. In addition, the path change process for the automated driving device 6A may be executed when a predetermined path change condition is satisfied such as, for example, when an APN with a larger RSPw than the current APN occurs or when the change of the serving cell occurs. The path change condition can include a case where an APN different from the current APN is allocated by the path allocation process shown in FIG. 4.

Further, the wireless communication device 5 may output a predetermined error signal to the automated driving device 6A even when any APN, which can be used by the wireless communication device 5, is selected as the APN for the automated driving and also the communication speed requested by the automated driving device 6A is not obtained. The error signal can be set to a signal indicating that the requested communication speed, in other words, real-time communication cannot be guaranteed. According to the configuration, based on the reception of the error signal from the wireless communication device 5, the automated driving device 6A may perform the vehicle control for safety such as, for example, a control of suppressing the vehicle traveling speed by a predetermined amount or a control of transferring the authority to an occupant on the driver sheet.

Further, the wireless communication device 5 may sequentially output, to the automated driving device 6A, a communication speed report signal indicating a communication status between the automated driving device 6A and the automated driving management center 4A. The communication speed report signal can be set to a signal directly or indirectly indicating the degree of communication delay such as, for example, the average value of delay time, the packet error rate, or the delay characteristic setting value. The communication speed here may be only the speed of upstream communication, or may be only the speed of downstream communication. According to the configuration, the automated driving device 6A can change the vehicle behavior (in other words, system response) based on the communication speed report signal from the wireless communication device 5. For example, the automated driving device 6A may plan and do the suppression of the traveling speed, handover request, and the like, based on a state where the speed of communication with the automated driving management center 4A is slow.

In addition, the wireless communication device 5 may store, as a communication log, data indicating the communication status in a storage device (not shown). According to the configuration, it may be possible to store the communication status during the automated driving. Further, it may be possible to leave data indicating that the communication error occurred. Such data can be used for cause analysis when an accident occurs during the automated driving, for example. By leaving the status of communication with the external device during the automated driving as a log, it becomes easier to analyze the cause of the accident.

The wireless communication device 5 described above is suitable for a configuration specified by ODD (Operational Design Domain) in which the communication delay time with the automated driving management center 4A is lower than a predetermined threshold. According to the above wireless communication device 5, it may be possible to reduce the risk that data communication related to the automated driving deviates from the predetermined allowable time. Further, according to one aspect, the wireless communication device 5 described above sequentially transmits information indicating the degree of communication speed to the automated driving device 6A from the wireless communication device 5. Therefore, the automated driving device 6A can change the system response according to the communication status. As a result, it may be possible to reduce the risk that the automated driving will continue even though the ODD is not satisfied from the viewpoint of communication delay. Note that the ODD specifies conditions and environments in which automated driving can be executed.

### <Other modifications>

Here, it is assumed that the data communication path is controlled for each in-vehicle device 6. However, the present disclosure is not limited to this control. The wireless communication device 5 may switch the communication path for each app. Further, for example, as shown in FIG. 8, when one in-vehicle device 6 executes multiple apps, multiple APNs respectively corresponding to applications may be allocated to one in-vehicle device 6. The APN may be set for each in-vehicle device 6 or for each app. Devices A to C shown in FIG. 8 can be set to, for example, the automated driving device 6A, the navigation device 6B, and the probe device 6C in order. An app A-1 can be set to, for example, an app that acquires traveling support information and generates a control plan. Further, an app A-2 can be set to an app that uploads data indicating an operation state of the automated driving device 6A to the automated driving management center 4A, the data being locally stored in the vehicle, for example. An app B-1 is, for example, a navigation app. An application C-1 can be set to an app that generates probe data and uploads it to the map server 4B.

Note that the app here refers to application software. Multiple apps may be allocated to one APN. The technical idea of allocating a wireless communication service to each in-vehicle device 6 in the present disclosure also includes a configuration of allocating a wireless communication service to each app. Further, the technical idea of allocating a certain wireless communication service to a certain in-vehicle device 6 or app also includes a technical idea of allocating the wireless communication service to data communication performed by the in-vehicle device 6 or app.

Further, in the above, as one example, the delay request of each in-vehicle device is expressed by the parameter which is like the delay allowable value and indicates that the immediacy is not requested as the numerical value is lower. However, the present disclosure is not limited to the expression. The delay request may be expressed using a parameter indicating that the higher immediacy is requested when the numerical value is high. The delay request may be expressed in immediacy levels that indicate the degree of requested immediacy. The immediacy level is higher, the shorter requested delay time.

In the above, a configuration has been disclosed in which Wi-Fi communication can be selected only for the delay allowable device. However, the present disclosure is not limited to this configuration. The Wi-Fi communication may be set as a communication path to the in-vehicle device 6 other than the delay allowable device, depending on the movement speed of the vehicle, such as when the vehicle is being stopped or traveling slowly. This is because the amount of vehicle movement per unit time is small during stopping or slow traveling, and therefore the communication delay can be allowed more than during the normal traveling.

In the above, the configuration of determining the mobility State as specified in Non-Patent Literature 1, in other words, determining the mobility state by using the number of cell reselections within the predetermined time has been disclosed. However, the present disclosure is not limited to this. The mobility state determination unit F33 may determine the mobility state based on the movement speed of the vehicle. That is, instead of the mobility state, the movement speed can be used as the index representing the mobility state. In this case, for example, the mobility state determination unit F33 determines that the mobility speed is at a low speed level when the movement speed is lower than a predetermined first threshold. The mobility state determination unit F33 determines the mobility state is at a middle speed level when the movement speed is equal to or higher than a first speed threshold and lower than a second speed threshold. Further, when the movement speed is equal to or higher than the second speed threshold, the mobility speed can be determined to be at a high speed level. The wireless communication device 5 can employ the low speed level as the reference level. That is, the embodiment described above may be implemented by replacing the normal level with the low speed level.

The first speed threshold that defines the low speed level may be, for example, the slow traveling speed such as 10 km/h, or may be 20 km/h or 30 km/h. The first speed threshold can be set, for example, to a value with which it can be expected that the stay time in the Wi-Fi communication area WCR will be 10 seconds or more. The stay time in the Wi-Fi communication area WCR may be calculated by dividing, by the movement speed, the assumed value (for example, average value) of the length of the Wi-Fi communicable section in which the Wi-Fi base station 7 is formed. Further, the second speed threshold may be higher than the first speed threshold, and can be set to, for example, 60 km/h and the like. The first speed threshold and the second speed threshold may be registered in the wireless communication device 5 in advance as parameters, or may be distributed from the network device. Such a configuration also achieves the similar effects to those of the embodiment described above.

Note that the mobility state determination granularity is not limited to three stages. Two stages or four stages or more may be sufficient. Further, the mobility state may be represented by continuous values. In that case, the reference level may be the limit value of the range in which the stay time in the Wi-Fi communication area WCR can be expected to be equal to or higher than a predetermined threshold. In addition, the Doppler shift amount may be used as an index representing the mobility state. The mobility state determination unit F33 may determine the level of the mobility state by using a threshold for the Doppler shift amount.

Further, in the above, the configuration in which the Wi-Fi is adopted as the short-range communication system is exemplified. However, the short-range communication system is not limited to the Wi-Fi. As the short-range communication, various communication methods defined by various standards of IEEE802.11 can be adopted. Further, as the short-range communication standard, any standard, such as a WAVE (wireless access in vehicular environment) standard disclosed in IEEE1509 and a DSRC (dedicated short-range communications) standard, can be adopted. When the WAVE or the like is applied, a roadside device as a communication partner corresponds to an access point forming a wireless local area network. It is assumed that the roadside device is connected to the PDN 35 via an optical line or the like so that the wireless communication device can perform data communication with the external device via the roadside device. The concept of the access point forming the wireless local area network can include various communication facilities which are connected to the PDN 35 and form a relatively short-range communication area as compared with cellular communication.

### <Additional notes>

The device and the method described in the present disclosure may be also implemented by a dedicated computer which constitutes a processor programmed to execute one or more functions concretized by computer programs. Also, the device and the method described in the present disclosure may be also implemented by a dedicated hardware logic circuit. Also, the device and the method described in the present disclosure may be also implemented by one or more dedicated computers which are constituted by combinations of a processor for executing computer programs and one or more hardware logic circuits. The computer program may be stored in a computer-readable non-transitory tangible storage medium as an instruction executed by a computer. Namely, the means and/or the functions which are provided by the wireless communication device 5 and the like may be provided by software stored in tangible memory devices and computers for executing them, only software, only hardware, or a combination thereof. For example, a part of or all of the functions in the wireless communication device 5 may be implemented as hardware. An aspect in which a certain function is implemented as hardware includes an aspect in which the function is implemented by use of one or more ICs or the like. The wireless communication device 5 may be implemented by using an MPU, a GPU, or a DFP (Data Flow Processor) instead of the CPU. The wireless communication device 5 may be implemented by combining multiple types of calculation processing devices such as a CPU, an MPU, and a GPU. The wireless communication device 5 may be implemented by using a SoC (System-on-Chip), Further, for example, various processing units may be implemented by using a FPGA (Field-Programmable Gate Array), an ASIC (Application Specific Integrated Circuit), or the like. It should be noted that the various programs described above may be stored in a non-transitory tangible storage medium. Various storage media such as HDD (Hard-disk Drive), SSD (Solid State Drive), EPROM (Erasable Programmable ROM), and SD card can be used as the program storage medium.

## Claims

1. A vehicle wireless communication device which is used for a vehicle and is an interface for data communication performed by at least one in-vehicle device with an external device which is a different communication device placed outside the vehicle, the vehicle wireless communication device comprising:
a short-range communication unit (F22) configured to perform short-range communication which is wireless communication via an access point of a wireless local area network placed outside the vehicle;
a cellular communication unit (F21) configured to perform cellular communication which is wireless communication via a cellular base station;
a mobility state determination unit (F33) configured to determine a mobility state of the vehicle; and
a communication path selection unit (F35) configured to select a communication path for communication between the in-vehicle device and the external device, based on the mobility state determined by the mobility state determination unit,
wherein
the communication path selection unit more preferentially adopts, as the communication path of the in-vehicle device, the short-range communication than the cellular communication when the mobility state is equal to or lower than a predetermined reference level, and
the communication path selection unit adopts, as the communication path of the in-vehicle device, the cellular communication when the mobility state exceeds the predetermined reference level.

2. The vehicle wireless communication device according to claim 1, further comprising
a delay allowable amount acquisition unit (F34) configured to acquire a delay allowable amount indicating directly or indirectly a length of an allowable communication delay time,
wherein
the communication path selection unit more preferentially adopts, as the communication path of the in-vehicle device, the short-range communication than the cellular communication when the mobility state is equal to or lower than a predetermined level and also the delay allowable amount of the in-vehicle device is equal to or higher than a predetermined short-range communication allowable threshold, and
the communication path selection unit adopts, as the communication path, the cellular communication when the delay allowable amount is lower than the short-range communication allowable threshold.

3. The vehicle wireless communication device according to claim 2, wherein
the vehicle wireless communication device is used by being connected to a plurality of in-vehicle devices,
the delay allowable amount acquisition unit is configured to acquire the delay allowable amount from each of the plurality of in-vehicle devices,
the communication path selection unit is configured to select the communication path for each of the plurality of in-vehicle devices based on the delay allowable amount for each of the plurality of in-vehicle devices and the mobility state determined by the mobility state determination unit,
the communication path selection unit more preferentially allocates, as the communication path, the short-range communication, than the cellular communication, to an in-vehicle device having the delay allowable amount equal to or higher than the short-range communication allowable threshold in a situation where the mobility state is equal to or lower than the reference level, and
the communication path selection unit allocates, as the communication path, the cellular communication to an in-vehicle device having the delay allowable amount lower than the short-range communication allowable threshold in the situation.

4. The vehicle wireless communication device according to claim 3, wherein
the vehicle wireless communication device is capable of using, as the cellular communication, a plurality of wireless communication services each having a different quality,
when the mobility state exceeds the reference level, regardless of whether the short-range communication is available, the communication path selection unit more preferentially allocates, to the in-vehicle device having the delay allowable amount equal to or higher than the short-range communication allowable threshold, a wireless communication service having a low service quality among the plurality of wireless communication services than a wireless communication service having a high service quality.

5. The vehicle wireless communication device according to claim 3 or claim 4, wherein
the vehicle wireless communication device is capable of using, as the cellular communication, a plurality of wireless communication services each having a different quality, and
when the plurality of in-vehicle devices have the delay allowable amount lower than the short-range communication allowable threshold, the communication path selection unit preferentially allocates, to an in-vehicle device having the delay allowable amount which is small, the wireless communication service having the high service quality.

6. The vehicle wireless communication device according to claim 3 or claim 4, wherein
the vehicle wireless communication device is capable of using, as the cellular communication, a plurality of wireless communication services each having a different quality,
the vehicle wireless communication device further includes a path characteristic acquisition unit (F32) configured to acquire an allocation frequency for each wireless communication service, and
when the plurality of in-vehicle devices have the delay allowable amount lower than the short-range communication allowable threshold, the communication path selection unit more preferentially allocates, to an in-vehicle device having a small delay allowable amount, a wireless communication service having a low allocation frequency.

7. The vehicle wireless communication device according to any one of claims 1 to 6, further comprising
a movement management unit (F31) configured to control selection of a serving cell in the cellular communication,
wherein
the mobility state determination unit determines whether the mobility state is normal, middle, or high based on a numerical number of reselection times of the serving cell by the movement management unit within an observation time notified from a network (2, 31, 32, 33, 34) that provides the cellular communication, and
the reference level is normal or middle.

8. The vehicle wireless communication device according to any one of claims 1 to 6, wherein
a state where a movement speed of the vehicle is lower than a predetermined threshold is set to the reference level, and
the mobility state determination unit is configured to determine whether the mobility state corresponds to the reference level based on the movement speed of the vehicle.

9. A communication control method that is used for a vehicle and executed by at least one processor (51), wherein
a communication path for data communication between at least one in-vehicle device and an external device includes:
short-range communication which is wireless communication via an access point of a wireless local area network placed outside the vehicle; and
a cellular communication that is wireless communication via a cellular communication base station,
the at least one processor controls either the short-range communication or the cellular communication,
the method includes:
a mobility state determination step (S2) that determines a mobility state of the vehicle; and
a communication path selection step (S5) that selects a communication path for communication between the in-vehicle device and the external device, based on the mobility state determined in the mobility state determination step,
the communication path selection step more preferentially adopts, as a communication path of the in-vehicle device, the short-range communication than the cellular communication when the mobility state is equal to or lower than a predetermined reference level, and
the communication path selection step adopts, as the communication path of the in-vehicle device, the cellular communication when the mobility state exceeds the predetermined reference level.
